# EUROPEAN PATENT APPLICATION

(11) **EP 0 984 584 A1**
(43) Date of publication of application: **08.03.2000**
(21) Application number: 99306950.9
(22) Date of filing: 01.09.1999
(51) Int. Cl.: H04L 12/18, H04L 29/06

(54) **Internet multimedia broadcast system**

(30) Priority: 04.09.1998 US 148244; 18.03.1999 US 272673
(71) Applicant: America Online, Inc., Dulles, VA 20166 (US)
(72) Inventor: Lippert, Patrick, Mission Viejo, California 92691 (US); Enete, Noel, Seal Beach, California 90740 (US); Watson, Richard, Austin, Texas 78751 (US); Pai, Ashok, Irvine, California 92612 (US); Lippke, David, Herndon, Virginia 20170 (US)
(74) Representative: Charig, Raymond Julian

(57) **Abstract**

A method and system for playback of live and pre-recorded multimedia data in real-time over a large scale communication network, such as the world-wide web. The invention allows a user connected to a specialized network to play back a multimedia broadcast. The invention includes a process that allows multimedia content to be created and scheduled as a playlist. The playlist data is compressed and transmitted to a host system as part of a capture protocol. The captured playlist data may then be "broadcast" to users. A user may choose a channel selection from a playlist, and cause the selected item to be downloaded and played back by means of a playback tool. The host system includes a highly efficient distribution system that allows a large number of users accessing the host through Terminal Information Handlers to rapidly access one or more channels of multimedia data. The system architecture provides a "fan out" mechanism that includes a master broadcast process that accepts a multi-stream data flow and then distributes the multi-stream data flow to essentially every Terminal Information Handler accessible to the host. The load of providing data streams is thus spread among a large number of Terminal Information Handlers, reducing access latency and providing support for hundreds of thousands of users over a large scale communication network.

## Description

### TECHNICAL FIELD

This invention relates to a method and system for playback of live and pre-recorded multimedia data in real-time over a large scale communication network, such as the world-wide web.

### BACKGROUND

The world wide web, or Internet, is a large scale communication network that has become increasingly popular with users for accessing data from a huge variety of sources. Currently, a large percentage of users access the Internet through modems, typically having a data rate between about 33.6 Kbps and 14.4 Kbps. For data such as text or simple graphics, such speeds are adequate to enable a "web browsing" experience that most users find enjoyable. These data rates are also acceptable for transmittal and playback of multimedia data *(e.g.,* audio, video, still images, text, hyperlinks, *etc.)* in real-time if the data is highly compressed. Accordingly, a number of schemes have been implemented for allowing users to access and download compressed multimedia data streams for local decompression and playback.

One such approach for real-time multimedia data playback utilizes the Internet multicast protocol. Multicasting includes transmitting a communication from one site to a group of selected receivers (multicasting differs from broadcasting in that a broadcast is sent to everyone who has the equipment or connection to receive it). Under this scheme, a user initiates an action *(e.g.,* selection of a uniform resource locator - URL - address) that requests that a multimedia data stream be transmitted from a server to the user's client system, for decompression and playback by a software process executing on the client. The request causes the router to which the user is coupled to access special multicast Internet addresses. The requested data is then supplied to the user (or "subscriber") by means of a multicasting backbone (MBone), which is a network of special Intemet sites that supports Internet Protocol multicasting for a limited number of users. MBone provides a faster technology than the Internet for transmitting real-time audio and video programs.

A disadvantage of Internet multicasting is that a multicast event (*e.g.*, a live radio show) can only effectively support several hundreds to a few thousands of users with uninterrupted data streams. Due to bandwidth constraints and the lack of guaranteed quality of service for the Internet, adding more users may cause objectionable pauses in content (*e.g.*, pauses in multimedia playback). Thus, for some events, Internet multicasting cannot meet user demand.

Accordingly, there is a need for an architecture that can provide for playback of live and pre-recorded multimedia data in real-time over a large scale communication network. such as the world-wide web, for a large number of users, typically in the hundreds of thousands of users. The present invention provides a method and system for such an architecture.

### SUMMARY

The preferred embodiment of the invention allows a user connected to a specialized network having a "Multimedia Broadcast" feature to play back a multimedia broadcast. One aspect of the invention includes a Studio Console Process executing on a content provider client system that allows multimedia content to be created and scheduled as a "playlist". The data comprising a playlist may be pre-recorded or live. The playlist data is compressed under the control of the Studio Console Process and transmitted to a host system as part of a "capture" protocol controlled by a "radio IN" process. The captured playlist data may then be "broadcast" to users who "tune in" to a "live multimedia show", or stored for later broadcast. (In this context, "broadcast" simply means transmittal of a data stream to a user who selects content to be played back on the user's client system).

A user may choose a "channel" selection from a playlist, and cause the selected item to be downloaded and played back by means of a "playback tool". The data stream corresponding to the selected item optionally may include embedded non-audio content. such as hypertext links to other forms, URLs to web pages, static images, video images, *etc*.

The host system includes a highly efficient distribution system that allows a large number of users accessing the host through Terminal Information Handlers to rapidly access one or more channels of audio data augmented by non-audio multimedia data. In particular, the inventive system architecture provides a "fan out" mechanism that includes a master broadcast process that accepts a multi-stream data flow from a "radio OUT" process and then distributes the multi-stream data flow to essentially every Terminal Information Handler accessible to the host. The load of providing data streams is thus spread among a large number of Terminal Information Handlers, reducing access latency to typically less than about 3 seconds, and providing support for hundreds of thousands of users over a large scale communication network such as the world-wide web.

In particular, in one aspect the invention includes a system for playback of live and pre-recorded multimedia data in real-time over a large scale communication network, including a computer system having a plurality of terminal information handlers for managing general information flow to and from a plurality of users; an output process for assembling multiple multimedia data streams for distribution; at least one broadcast process, in communication with the output process, for distributing the assembled multiple multimedia data streams to each of the terminal information handlers; and a selector process, in communication with the terminal information handlers, for receiving a channel request from a user through an terminal information handler associated with the user, mapping the channel request to a corresponding one of the multiple multimedia data streams, and enabling transmission of the corresponding one multimedia data stream to the user through the associated terminal information handler. In another aspect, the invention includes a corresponding method.

The details of one or more embodiments of the invention are set forth in the accompanying drawings and the description below. Other features, objects, and advantages of the invention will be apparent from the description and drawings, and from the claims.

### DESCRIPTION OF DRAWINGS

FIG. 1A is block diagram of the preferred embodiment of the invention.

FIG. 1B is block diagram of a portion of an alternative embodiment of the invention.

FIG. 2 is a "screen shot" of one embodiment of a graphical user interface (GUI) for defining a data stream within a studio console process in accordance with the invention.

FIG. 3 is a "screen shot" of one embodiment of a GUI for defining a playlist schedule within a studio console process in accordance with the invention.

FIG. 4 is a "screen shot" of one embodiment of a GUI for displaying playback information and allowing selection of a playback channel within a user client process in accordance with the invention.

FIG. 5A is a block diagram showing the client-host architecture for a capture session.

FIG. 5B is a data flow diagram showing the data flow for establishing a capture session.

FIG. 5C is a data flow diagram showing the data flow for recording during a capture session.

FIG. 5D is a data flow diagram showing the data flow for ending a capture session.

FIG. 6A is a data flow diagram showing the data flow architecture for playback of a multimedia data stream.

FIG. 6B is a data flow diagram showing the data flow for starting a playback session.

FIG. 6C is a data flow diagram showing the data flow for switching a playback channel.

FIG. 6D is a data flow diagram showing the data flow for ending a playback session.

Like reference numbers and designations in the various drawings indicate like elements.

### DETAILED DESCRIPTION

### Overview

The preferred embodiment of the invention allows a user connected to a specialized network having a "Radio" feature *(e.g.,* the America Online network) to play back an audio broadcast that may be augmented with non-audio multimedia data, such as video and still images, URLs, text fields, *etc.* One aspect of the invention includes a Studio Console Process executing on a content provider client system that allows such content to be created and scheduled.

For example, the Studio Console Process enables a content provider to schedule a week's worth of prerecorded content that changes daily. The content provider uses a form in the Studio Console Process to assemble a "playlist" for each day. If the content provider then needs to conduct a live event on the Radio system, the content provider uses the Studio Console Process to override any existing playlist. When the live event is completed, the playlist resumes as originally scheduled.

The data comprising a playlist may be pre-recorded or live. The playlist data is compressed under the control of the Studio Console Process and transmitted to a host system as part of a "capture" process. The captured playlist data may then be "broadcast" to users who "tune in" to a "live multimedia show", or stored for later broadcast. (In this context, "broadcast" simply means transmittal of a data stream to a user who selects content to be played back on the user's client system).

A user may initiate a form that displays available playlists for one or more "channels" of a host system, choose a selection from a playlist, and cause the selected item to be downloaded and played back by means of a "playback tool". The data stream corresponding to the selected item optionally may include embedded non-audio content, such as hypertext links to other forms, URLs to web pages, static images, or video images.

The host system includes a highly efficient distribution system that allows a large number of users to rapidly access one or more channels of audio data augmented by non-audio data. The latency of access - the time between a request for playback of a particular channel and commencement of playback on a user client - is typically less than about 3 seconds, compared to tens of seconds for many prior art systems.

### System Architecture - Content Provider Client

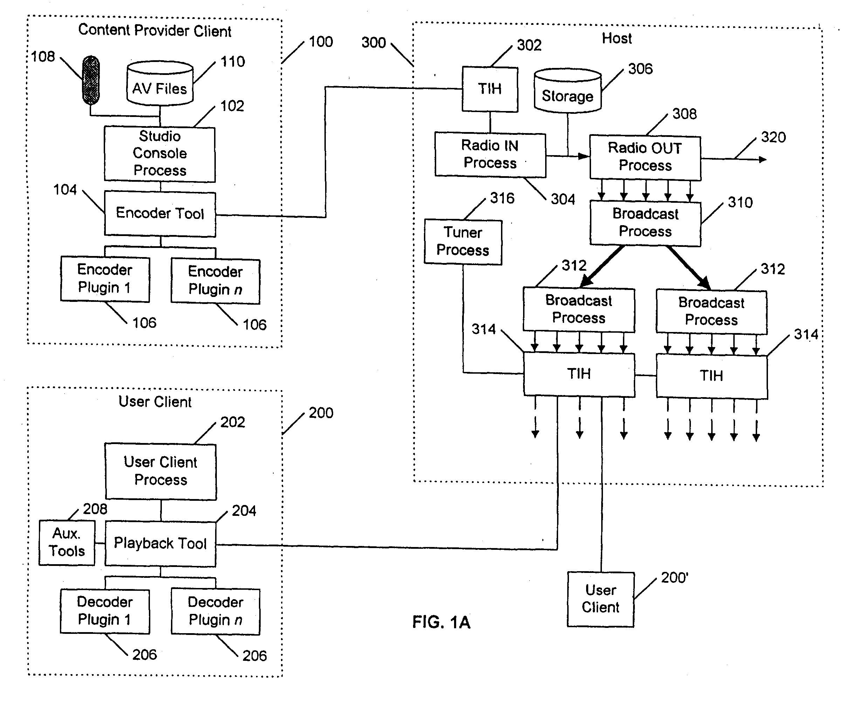

FIG. 1A is block diagram of the preferred embodiment of the invention. Content to be broadcast is typically developed by a content provider utilizing a content provider client 100. A Studio Console Process 102 executes on the content provider client 100. The Studio Console Process 102 allows a content provider to define ("author") a play list data stream to be uploaded to a host 300 during a "capture" session for "broadcast" to users selecting the channel assigned to the playlist. (Details of a capture session are described below.) The playlist data stream includes audio content and may include images or other data which may be inserted into the data stream as the data is being compressed. In the preferred embodiment, the Studio Console Process 102 communicates with a separate encoder tool 104 that responds to and carries out the directions of the content provider input by means of the Studio Console Process 102. In particular, the encoder tool 104 selects one of a plurality of encoder "plugins" 106 to perform necessary data compression of the multimedia content of the data stream. The encoder tool 104 also packages the compressed multimedia content into packets for transmission to the host 300. In the preferred embodiment, audio data is given priority over non-audio data to reduce the likelihood of any objectionable interruption in audio playback. In general, other types of data may be appended to audio packets as long as the total transmission packet (*e.g.*, an Internet protocol packet) does not exceed a target bit rate *(e.g.,* 10 Kbps).

Audio content may come from "live" sources to the content provider client 100, such as an input to a computer sound card from a microphone 108 or "line-in" source (*e.g.,* an analog or digital audio playback device such as an audio tape or CD player), or a direct input to the computer from a direct digital connection *(e.g.,* CDROM player). Alternatively, audio content may come from pre-recorded ("canned") sound files, such as WAV and ART files, located on storage media 110 accessible to the content provider client 100.

Similarly, images (still or video) may come from "live" sources to the content provider client 100, such as video cameras. Still images can be from standard file formats, including ART, BMP, GIF or JPG (JPEG) formats. In the preferred embodiment, all such formats are re-compressed into a single format (ART) for the broadcast data stream.

One aspect of the invention is that a content provider may change an encoder plugin 106 "on-the-fly" to accommodate different content inputs as such inputs change. For example, an encoder plugin 106 particularly well-suited for speech may be used for a time (for example, while a conductor is explaining a music piece about to be played), and then an encoder plugin 106 particularly well-suited for music may be switched in when the source material changes (for example, when the music piece is being played).

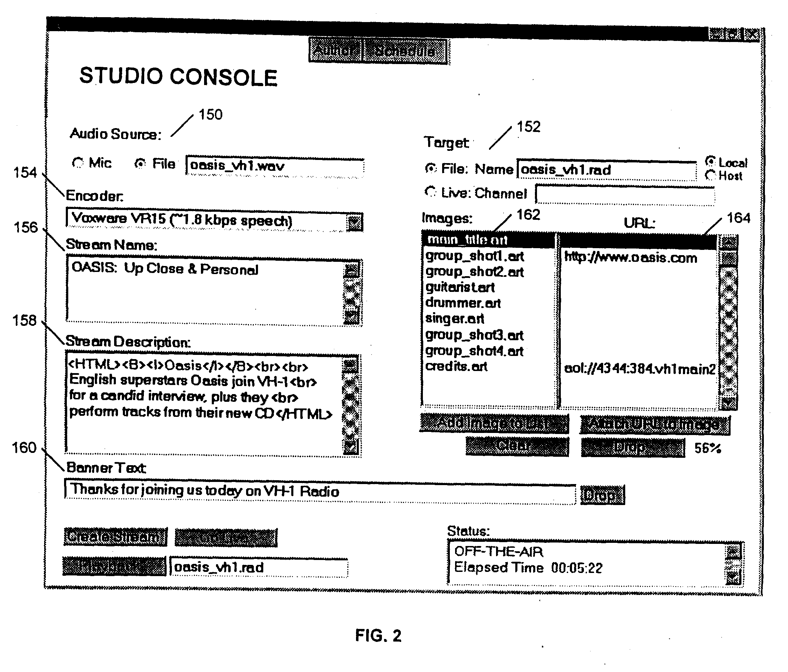

FIG. 2 is a "screen shot" of one embodiment of a graphical user interface (GUI) for defining a data stream within the Studio Console Process 102. The preferred content definition GUI for the Studio Console Process 102 includes controls that allow the content provider to do at least the following in "authoring" a playlist entry:
- Select an audio source 150 ("live" or "canned") for a data stream.
- Define an audio target 152 for the data stream (*e.g.*, a file name for storage on the content provider client 100 or on the host 300 for later broadcast, or a channel name for a live broadcast).
- Select an encoder 154 for compressing the audio source data stream. The list of available encoders allows selection of varying degrees of compression, depending on the desired final sound quality and the nature of the audio source material (*e.g.*, speech generally can be compressed more than music). Examples of such encoders include those available from Voxware, Inc. of Princeton, NJ. For example, the Voxware VR12 Speech Codec requires a bit rate of only 1.5 Kbps for speech, while a music codec may require as much as 10 Kbps.
- Define a "stream name" 156, which is a name for the data stream that is delivered to a user's playback tool whenever playback is started for a particular virtual channel.
- Define a "stream description" 158 that provides a detailed description of the data stream that can be delivered to a user's playback tool on demand. For example, the description may contain rich-text - HTML formatted text that may contain font and color information tags.
- Define "caption text" 160, which is simple text that can appear within the data stream. In the preferred embodiment, when a playback tool receives a complete caption string. the caption string is forwarded to an auxiliary tool for display in a text field on a form, if the field exists. The caption text may be used for closed captioning or for other "headline" updates, and is preferably in "rich text format" (RTF). The caption text may also included hyperlinks.
- Select image data 162 that can be delivered appended to and interleaved with the audio data. The image data is inserted in the data stream wherever available space is found after the audio packets (a target bit rate for the data stream is set at authoring time) to expedite transfer to the client. When data is received at the playback tool, it is forwarded to an auxiliary tool for rendering. The original image data may be in any of a variety of formats, such as the well-known ART, BMP, GIF or JPG (JPEG) image formats, but is preferably transformed into a single multimedia ART format for broadcast. A number of images may be linked to form a "slide show". To save space in the data stream itself, a global ID reference to an image or video data may be delivered instead of an image itself. The global ID is passed by the user's playback tool to an auxiliary tool for rendering. This approach is useful if the referenced data resides on the client's system *(i.e.,* the data was downloaded previously). Video data can also be delivered appended to and interleaved with the audio data. As with image data, video data is inserted in the data stream wherever available space is found after the audio packets. However, a significant amount of bandwidth is required for video data, even for highly compressed video images, and thus should be limited for low-bandwidth users. When video data is received at the playback tool, it is forwarded to an auxiliary tool for rendering.
- Select or define URLs 164 that can be delivered appended to and interleaved with the audio data. When URLs are received at the playback tool, they forwarded to an auxiliary tool which attaches them to a button or image on a form (if one exists) displayed to the user. When the button or image is selected by the user, the attached URL is activated in conventional fashion.

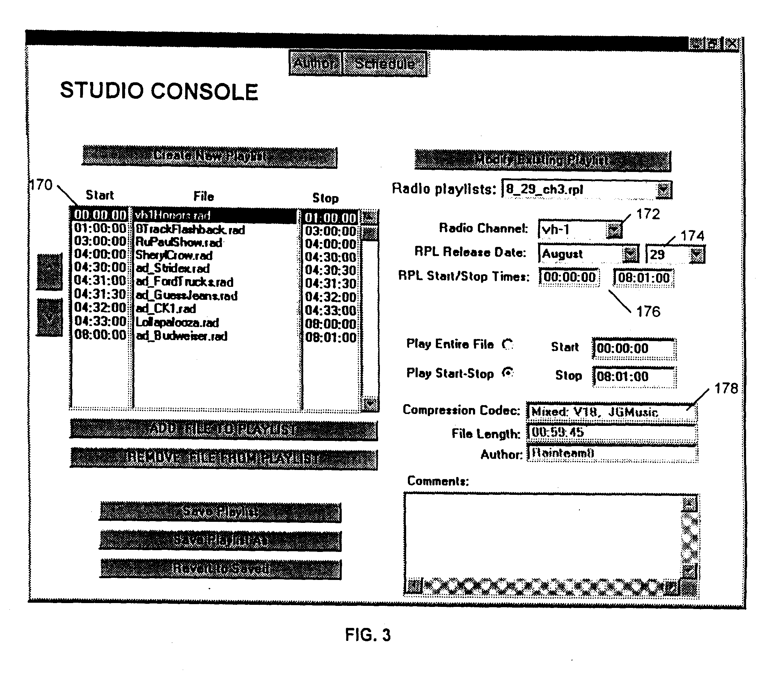

The Studio Console Process 102 also may be used to schedule playlist content on a channel for an extended period of time. FIG. 3 is a "screen shot" of one embodiment of a GUI for defining a playlist schedule within the Studio Console Process 102. The preferred playlist definition GUI for the Studio Console Process 102 includes controls that allow the content provider to do at least the following in scheduling a playlist:
- Define a schedule 170 of start and stop times for each of a plurality of audio content files.
- Select a channel 172 on which multimedia content will be made available to users.
- Define a release date 174 for the playlist.
- Check the overall start and stop times 176 and file characteristics 178 for the playlist content.

### System Architecture - User Client

FIG. 1A also shows a user client 200. In the preferred embodiment, a User Client Process 202 communicates through a playback tool 204 across a network *(e.g.,* the Internet) with the host 300 to access playlists and select a channel for playback. The User Client Process 202 responds to and carries out the directions of a user by means of the playback tool 204. In particular, the playback tool 204 selects one of a plurality of decoder plugins 206 to perform necessary data decompression of the multimedia content of a received data stream. The playback tool 204 also parses multimedia packets received from the host 300. In particular, the playback tool 204 processes all audio data internally, but forwards all non-audio data to one or more auxiliary tools 208, each of which can manage and render such data.

In the preferred embodiment, while a data stream may contain all types of data, each particular calling form displayed by the User Client Process 202 notifies the auxiliary tools 208 of the data that pertain to the form. That way, different forms can have different presentations for the same data stream. For example, one small form may only have start and stop buttons for the audio portion of the stream with no image box. The auxiliary tools 208 would not try to render any accompanying image data. Another, larger form may have an image box that is updated by an auxiliary tool 208 whenever a new image appears in the data stream.

In the preferred embodiment. the user client process 202 provides the ability for a user to play back a particular playlist selection until a different channel is selected or the playback session is ended. Multimedia content may be delivered in a one-time transmission or may be continuously broadcast in a looping manner. In either event, the user is able to join an active broadcast at any point during its transmission.

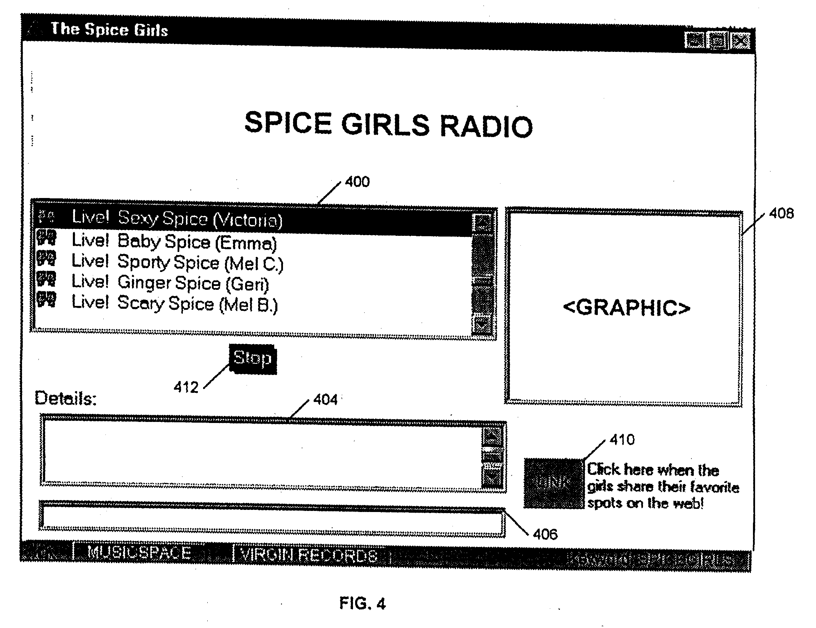

FIG. 4 is a "screen shot" of one embodiment of a GUI for displaying playback information and allowing selection of a playback channel within the User Client Process 202. (Details of a playback session are described below.) The preferred playback GUI includes controls that allow the user to do at least the following:
- Display a playlist 400 of stream names for selectable data streams.
- Display a stream description 404 for a selected stream name.
- Display accompanying caption text 406.
- Display accompanying graphics 408.
- Display active link buttons 410 for accompanying URLs.
- Include other desired or convenient controls, such a stop button 412. For example, if the user presses the stop button 412, the playback tool 204 should blank out the stream name, stream description, link button, and caption text. The playback tool 204 could also display a default name, such as "no station selected". The playback tool 204 may also cause a blank image sent to the appropriate auxiliary tool 208 if the user presses the stop button 412 while an image is being rendered. A standard graphic can be displayed instead.

### System Architecture - Host Broadcast System Architecture

Referring to FIG. 1A, a playlist of multimedia content generated by a content provider client 100 is transferred in conventional fashion over a network *(e.g.,* the Internet) to a host 300. The host 300 generally includes one or more "front-end" Terminal Information Handlers (TIH) 302 that manage general information flow to and from the host 300 for multiple users. For example, on the America Online network, each TIH 302 can manage about 63 concurrent users. A radio IN process 304 executing on the host 300 receives data from a content provider client 100 that is transmitted by means of "ri" (radio input) messages. The radio IN process 304 generally stores multimedia content as files in a storage device 306 that is accessible to the host 300 for later broadcast or for archiving of the multimedia content. However. the radio IN process 304 may also be used to directly transfer the received multimedia content to a radio OUT process 308 for broadcast to users requesting playback.

In accordance with a primary aspect of the invention, the radio OUT process 308 provides multiple data streams of multimedia content for access by users. In particular. the radio OUT process 308 may access multiple data streams from one or more storage devices 306, or accept "live" feeds of multimedia content from the radio IN process 304 *(e.g.,* a live interview or live reporting from the scene of a news event). Thus, the radio OUT process 308 gathers and assembles the data packets representing such multimedia content data streams into a "broader" multi-stream data flow.

In order to provide a highly efficient distribution system that allows a large number of users to rapidly access one or more channels of multimedia data, the inventive system architecture provides a "fan out" mechanism that includes a master broadcast process 312. The broadcast process 312 accepts the multi-stream data flow from the radio OUT process 310 and then distributes the multi-stream data flow (shown as thick arrows in FIG. 1A) along with instances of itself 312 to essentially every terminal information handler 314 accessible to the host 300. (Although only two instances of the broadcast process 312 and two TIHs 314 are shown, any number may be selected). Thus, the load of providing data streams is spread among a large number of Terminal Information Handlers 314.

For example, in the America Online network, one instance of each broadcast process would be distributed within an internal network to a "pod", each comprising a large number of individual servers. Coupled to each pod in a ring are multiple TIHs 314. Executing on each pod is an instance of the broadcast process 312. which circulates the multi-stream data flow among all TIHs within the pod. In this manner, any one channel of multimedia data stream within the multi-stream data flow is available for transmittal to a user requesting playback with very little delay. As noted above, in one embodiment of the invention, the access latency is typically less than about 3 seconds.

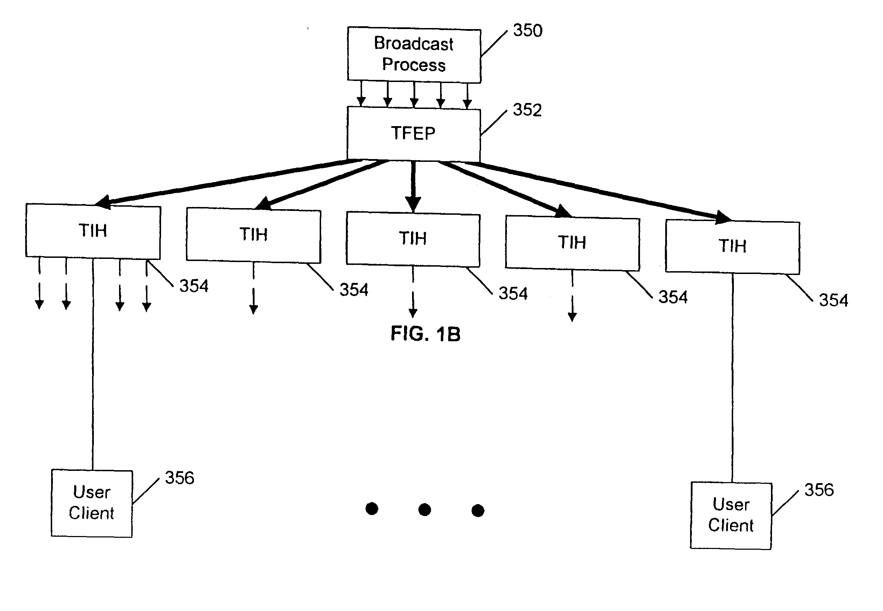

FIG. 1B is block diagram of a portion of an alternative embodiment of the invention. In this embodiment, the Terminal Information Handlers are configured hierarchically. A multi-stream data flow from a broadcast process 350 is transmitted to a top-level terminal front end processor (TFEP) 352 of conventional design, which controls multiple TIHs 354. The TFEP 352 then re-transmits the multi-stream data flow to dependent TIHs 354, reducing data traffic within the overall system compared to the ring architecture referenced above. Multiple user clients 356 may then access selected channels of the multi-stream data flow through the TIHs 354.

Once the multi-stream data flow content is available in the TIHs 314, any channel of the multi-stream data flow is available for transmittal to a user requesting playback. To allow a user to select a particular channel, a tuner process 318 executing within the host 300 is coupled to each TIH 314. The tuner process 318 intercepts channel requests from users and commands the TIH 314 with which the user is in communication to deliver a particular multimedia data stream to that user from the multi-stream data flow. Thereafter, packets from that data stream are transmitted to the requesting user (see below for further discussion of playback sessions).

An additional function of the tuner process 318 is that it can "map" a channel name to a channel number. For internal efficiencies, each channel of the multi-stream data flow is given a channel number. However, it may be desirable to give one or more channel names to each channel number. Thus, channel "1" may be assigned the channel name of "The AOL Radio Hour" on one playback list form displayable to users for a particular time slot, but be assigned the channel name of "The Motley Fool" on the same or another playback list form for a different time slot. Accordingly, in the preferred embodiment, the tuner process 318 maintains a map of channel names to channel numbers. The tuner process 318 then maps an incoming channel name from a user's channel request to the corresponding channel number. That channel number is then used to select the corresponding data stream on the TIH 314 to transmit to the user.

The inventive architecture may also be used in conjunction with conventional Internet multicast systems by providing a connection 320 from the radio OUT process 308 to a multicast server system, in known fashion. This capability may be useful when a channel is expected to have a relatively small audience which would not tax the "fan out" characteristics of the multicast system. However. for large "fan out" needs, the inventive architecture provides the advantages noted above.

### Capture Session

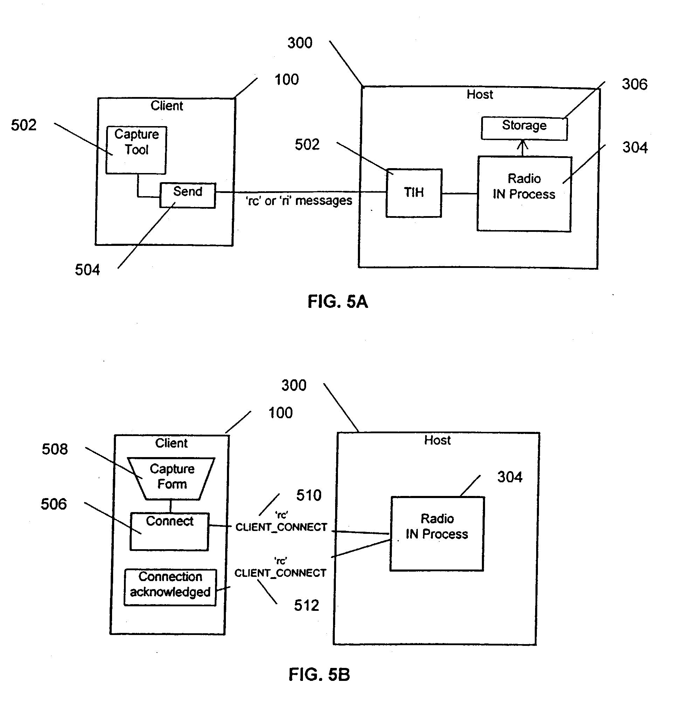

FIG. 5A is a block diagram showing the client-host architecture for a capture session. A content provider is provided with the Studio Console Process 102, encoder tool 104, and encoder plugins 106 described above, which may be considered to be a single "capture tool" 502 executing on a content provider client 100. The capture tool 502 communicates with the host 300 over a network through a Send function 504, which takes care of the details of data transmission in known fashion. The host 300 communicates with the capture tool 502 through a Terminal Information Handler (TIH) 302, as described above. The capture process requires only one host process, the radio IN process 304, whose function is to receive data from a content provider that is transmitted by means of "ri" (radio input) messages. The radio IN process 304 stores multimedia content as files in a storage device 306 that are accessible to the host 300 for later broadcast. There are three phases of a capture session: Starting the capture session, Recording, and Ending the capture session.

For a live input *(e.g.,* a microphone capture), initiating a capture session will start recording, compressing the multimedia data using the selected encoder plugin 106, packetizing the compressed multimedia data as a data stream, and uploading the data stream to the host 300. Since the data is compressed and transmitted while the "live" data (*e.g.*, voice from a microphone) is being recorded, the author has no ability to edit and review the content. This option will most likely be used for unrehearsed content. For pre-recorded input (*e.g*., a WAV file), initiating a capture session will start compressing the multimedia data using the selected encoder plugin 106, packetizing the compressed multimedia data as a data stream, and uploading the data stream to the host 300. Because the input data is file based, the author has the ability to edit and review content off-line before submitting it to the host 300.

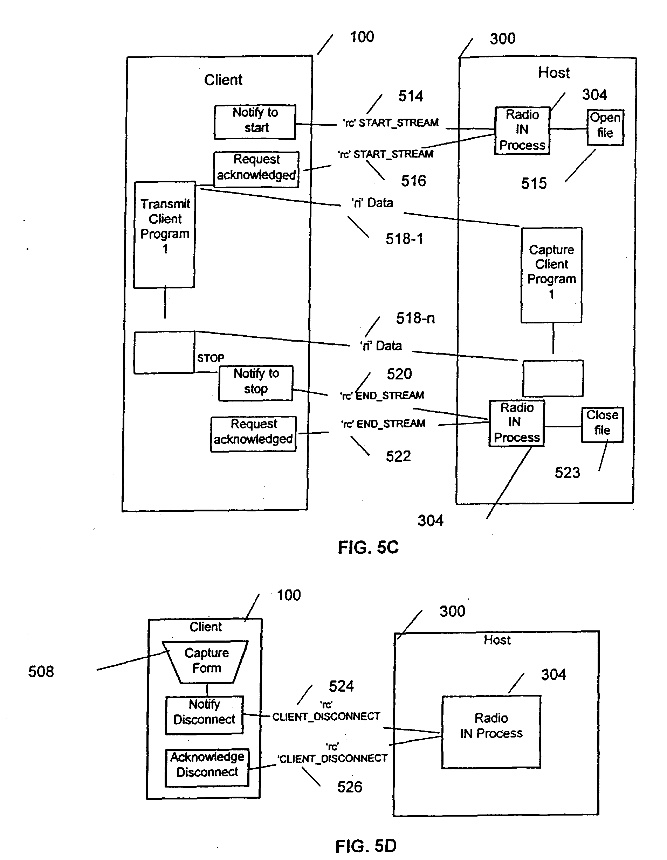

FIG. 5B is a data flow diagram showing the data flow for establishing a capture session (the representation of the Send function 504 and TIH 302 from FIG. 5 have been omitted for clarity). To establish a capture session, the user invokes a "connect" function 506 in a form 508 of the capture tool 502, which uploads a CLIENT_CONNECT message 510 to the radio IN process 304 within the host 300. The radio IN process 304 returns the same message 512 to acknowledge that a connection has been established.

FIG. 5C is a data flow diagram showing the data flow for recording during a capture session. After the host 300 has been informed that the content provider client 100 will be sending data, the capture tool 502 initiates transfer of multimedia content with an "rc" (radio control) START_STREAM message 514. The radio IN process 304 returns the same message 516 to acknowledge the start of data transmission and opens 515 a file to store the data stream. The initialization message is then followed by "ri" (radio input) DATA messages 518-l to 518-*n* from the capture tool 502. The DATA messages contain the audio data and any supplemental data appended to the audio data. At the end of the data stream, the capture tool 502 sends an "rc" (radio control) END_STREAM message 520. The radio IN process 304 returns the same message 522 to acknowledge the end of data transmission and closes 523 the data file used to store the data stream.

FIG. 5D is a data flow diagram showing the data flow for ending a capture session. The capture session is stopped by closing the open form 508 of the capture tool 502 or by pressing the appropriate cancel control. When this happens, the capture tool 502 sends an "rc" (radio control) CLIENT_DISCONNECT message 524 to the radio IN process 304. The radio IN process 304 returns the same message 526 to acknowledge that the connection has been terminated. When this occurs, the capture tool 502 is shutdown by the content provider client 100.

### Playback Session

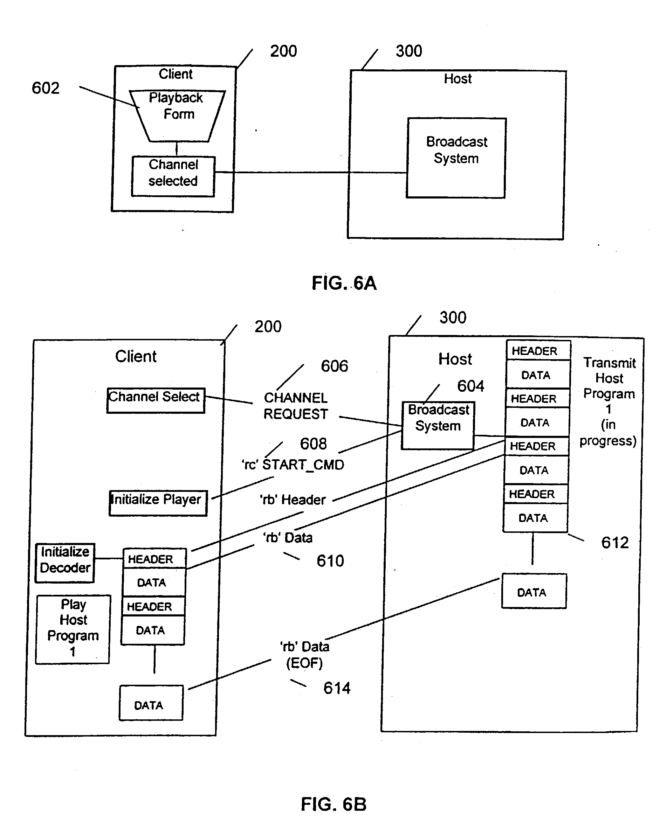

FIG. 6A is a data flow diagram showing the data flow architecture for playback of a multimedia data stream. A user is provided with a user client process 202, playback tool 204, and decoder plugins 206 as described above, which may be considered to be a single "playback tool" executing on the user client 200. The playback tool includes a playback form 602 to accept user selection of a channel. The channel selected is communicated to the processes described above with respect to FIG. 1A, which may be considered to be a single "broadcast system" 604 from the user's perspective.

The broadcast system 604 manages the delivery of radio control messages ("rc") and radio broadcast ("rb") data to the user client 200 through a Terminal Information Handler, as described above. There are four phases of playback sessions: Start Playback, Playback, Switching Channels, and Ending Playback.

FIG. 6B is a data flow diagram showing the data flow for starting a playback session. To establish a playback session, the user uses the playback tool to download a selection form from the host 300. In particular, the broadcast system 604 will have initialized the playback form 602 with the available channels. A channel is selected from the playback form 602, and the playback tool notifies the broadcast system 604 of the selected channel through a CHANNEL REQUEST command message 606.

Once the broadcast system 604 has been informed that the user client 200 has selected a particular radio channel for playback *(i.e.,* the tuner process 316 receives an "rw" token with a channel name), the broadcast system 604 initiates the broadcast with a "rc" (radio control) START_CMD message 608. This initialization message is immediately followed by "rb" (radio broadcast) data messages 610. The data messages 612 preferably alternate header information and multimedia data. In the preferred embodiment, an identical header token is repeated with every data transmission so that users can join in the broadcast at any particular moment. The final "rb" data packet 614 transmitted contains an "end-of-file" (EOF) identifier. In the preferred embodiment, if the playback content loops, the first data header will be transmitted again, and the broadcast will restart. Otherwise, a special "rc" STOP_PLAY_0 message (not shown) is sent to shut down that particular channel.

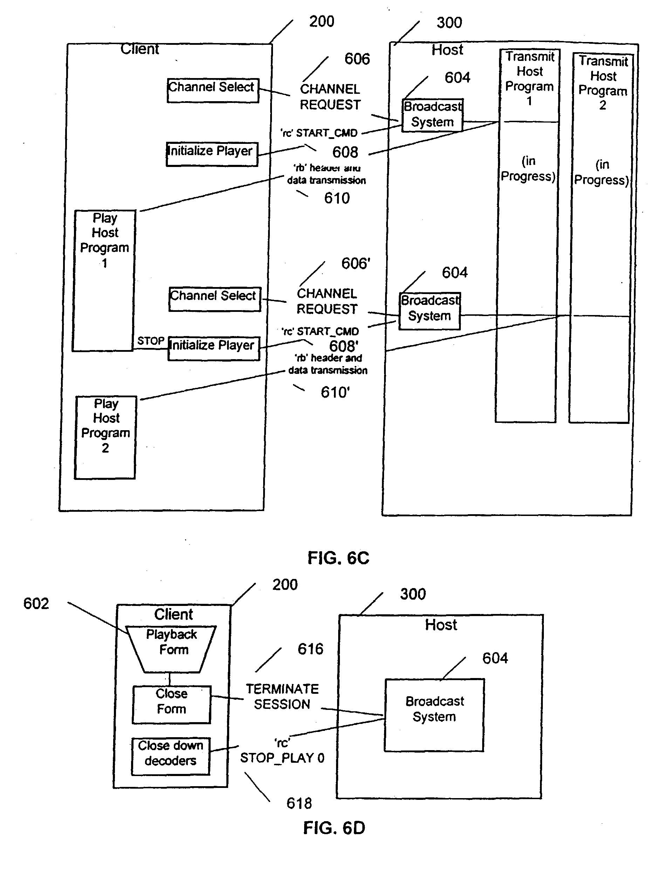

FIG. 6C is a data flow diagram showing the data flow for switching a playback channel. The basic process is similar to the process described for FIG. 6B. However. when a program is playing, the user can request a different program using the playback form 602. The playback tool notifies the broadcast system 604 of the new selected channel through a channel request message 606'. The broadcast system 604 then initiates the new broadcast with a "rc" (radio control) START_CMD message 608'. This initialization message is immediately followed by "rb" (radio broadcast) data messages 610' for the new channel. Whenever a new channel is started, the stream name and stream description is sent to the appropriate auxiliary tool 208 for display if provided by the playback form 602.

FIG. 6D is a data flow diagram showing the data flow for ending a playback session. The playback session is stopped by closing the open playback form 602 or by pressing the appropriate cancel control. When this happens, a TERMINATE SESSION command message 616 is sent to the broadcast system 604 to force a STOP_PLAY_0 618 message to be sent back to the user client 200. When this occurs, the playback tool is shutdown.

### Computer Implementation

The invention may be implemented in hardware or software, or a combination of both. However, preferably, the invention is implemented by means of a computer program executing on one or more programmable systems each comprising at least one processor. a data storage system (including volatile and non-volatile memory and/or storage elements). at least one input device, and at least one output device. Program code is applied to input data to perform the functions described herein and generate output information. The output information is applied to one or more output devices, in known fashion.

Each such program may be implemented in any desired computer language (including machine, assembly, high level procedural, or object oriented programming languages) to communicate with a computer system. In any case, the language may be a compiled or interpreted language.

Each such computer program is preferably stored on a storage media or device *(e.g.,* ROM or magnetic media) readable by a general or special purpose programmable computer, for configuring and operating the computer when the storage media or device is read by the computer to perform the procedures described herein. The inventive system may also be considered to be implemented as a computer-readable storage medium, configured with a computer program, where the storage medium so configured causes a computer to operate in a specific and predefined manner to perform the functions described herein.

A number of embodiments of the present invention have been described. Nevertheless, it will be understood that various modifications may be made without departing from the spirit and scope of the invention. For example, while specific controls have been shown in FIGS. 2-4, other controls may be used to provide similar functionality. Further, while FIGS. 5A-5D and 6A-6D show preferred messaging and data flow protocols, other messaging and data flow protocols may be used to provide similar functionality. Accordingly, other embodiments are within the scope of the following claims.

## Claims

1. A system for playback of live and pre-recorded multimedia data in real-time over a large scale communication network, including:
(a) a computer system having a plurality of terminal information handlers for managing general information flow to and from a plurality of users;
(b) an output process for assembling multiple multimedia data streams for distribution;
(c) at least one broadcast process, in communication with the output process, for distributing the assembled multiple multimedia data streams to each of the terminal information handlers; and
(d) a selector process, in communication with the terminal information handlers, for receiving a channel request from a user through an terminal information handler associated with the user, mapping the channel request to a corresponding one of the multiple multimedia data streams, and enabling transmission of the corresponding one multimedia data stream to the user through the associated terminal information handler.

2. The system of claim 1, further including an input process for receiving multimedia data streams for distribution.

3. The system of claim 1, further including at least one storage device for storing multimedia data streams for later transmission.

4. A method for playback of live and pre-recorded multimedia data in real-time over a large scale communication network, including the steps of:
(a) providing a plurality of terminal information handlers for managing general information flow to and from a plurality of users;
(b) assembling multiple multimedia data streams for distribution;
(c) distributing the assembled multiple multimedia data streams to each of the terminal information handlers; and
(d) receiving a channel request from a user through an terminal information handler associated with the user, mapping the channel request to a corresponding one of the multiple multimedia data streams, and enabling transmission of the corresponding one multimedia data stream to the user through the associated terminal information handler.

5. The method of claim 4, further including the step of receiving multimedia data streams for distribution.

6. The method of claim 4, further including the step of storing multimedia data streams for later transmission.
